# EUROPÄISCHE PATENTSCHRIFT

(11) **EP 3 601 445 B1**
(45) Veröffentlichungstag und Bekanntmachung des Hinweises auf die Patenterteilung: **16.06.2021**
(21) Anmeldenummer: 18711477.2
(22) Anmeldetag: 12.03.2018
(51) Int. Cl.: C09D 5/00

(54) **GRAPHEN-HALTIGE GLEITLACKE**
DRY FILM LUBRICANTS CONTAINING GRAPHENE
VERNIS LUBRIFIANT CONTENANT DU GRAPHÈNE

(30) Priorität: 22.03.2017 DE 102017002792; 25.01.2018 DE 102018000610
(43) Veröffentlichungstag der Anmeldung: 05.02.2020
(73) Patentinhaber: Klüber Lubrication München SE & Co. KG, 81379 München (DE)
(72) Erfinder: SEEMEYER, Stefan, 81379 München (DE); VON HÖRSTEN, Elena, 81379 München (DE); PFREINTNER, Amin, 81379 München (DE); STAUB, Philipp, 81379 München (DE)
(74) Vertreter: Hering, Hartmut
(86) Internationale Anmeldenummer: PCT/EP2018/000096
(87) Internationale Veröffentlichungsnummer: WO 2018/171931

(56) Entgegenhaltungen:
- CN-A- 106 090 001
- DE-A1-102012 215 666
- GB-A- 2 528 306
- KR-A- 20160 034 625

## Beschreibung

Die vorliegende Erfindung betrifft Graphen-haltige Gleitlacke. Durch die Verwendung von Graphen wird der Gleitlack hinsichtlich seiner Verschleißbeständigkeit und des Reibungsverhaltens verbessert.

Als Gleitlacke werden Lacksysteme bezeichnet, wenn sie Festschmierstoffe oder schmieraktive Substanzen enthalten. Es ist bekannt in Gleitlacken Polyamidimid als Bindemittel zu verwenden. Des weiteren ist bekannt, diesen Gleitlacken ein Lösungsmittel, z.B. Wasser oder ein organisches Lösungsmittel zuzusetzen. Außerdem wird Graphen in verschiedenen Harzmatrizen eingesetzt. Bei Graphen handelt es sich um eine Modifikation des Kohlenstoffs, die eine zweidimensionale Struktur aufweist, in der jedes Kohlenstoffatom im Winkel von 120° von drei weiteren Kohlenstoffatomen umgeben ist, so dass sich ein bienenwabenförmiges Muster ausbildet. Im Vergleich mit dem dreidimensionalen Graphit hat Graphen eine sehr hohe Zugfestigkeit. Durch die Verwendung des Graphens sollte die Reibung in dem Gleitlack herabgesetzt werden.

So ist aus der Dissertation von B. Schlüter (Funktionalisierte Graphene für tribologische Anwendungen, Dissertation, Freiburg 2014) bekannt Graphen in Form eines thermisch reduzierten Graphitoxids (TRGO) als tribologischen Füllstoff bzw. Festschmierstoff zu verwenden. Hierzu wurde TRGO unter anderem in eine Epoxid-Matrix eingebracht und eine Erniedrigung des Reibwertes beobachtet.

So beschreibt die US 2014/0023450 A1 eine verschleißverhindernde Beschichtung für Verschleißflächen in Kompressoren, die wenigstens eine Vorläuferkomponente enthält, die in Form eines Pulvers verwendet wird, und aus einem pulverförmigen thermoplastischen Polymer, z.B. Polyetheretherketon (PEEK), einem ersten Schmierstoff, z.B. Molybdänsulfid und einem zweiten Schmierstoff, z.B. Polytetrafluorethylen (PTFE) besteht und die vor der Verwendung erhitzt wird, um eine einheitliche Beschichtung der zu beschichtenden Oberflächen zu gewährleisten. Vor der Beschichtung wird die Oberfläche mit einem Primer behandelt, dazu wird beispielsweise Polyamidimid eingesetzt. Als erster bzw. zweiter Schmierstoff wird unter anderem auch Graphen eingesetzt. Das Graphen ist also in der thermoplastischen Schicht vorhanden.

Die EP 2 794 769 B2 betrifft eine Zusammensetzung zur Herstellung eines tribologischen Kompositmaterials umfassend mindestens einen plättchenförmigen Festkörperschmierstoff, mindestens einen Typ anorganischer plättchenförmiger Pigmentteilchen, mindestens eine oberflächenaktive Verbindung, die mindestens eine hydrophile und mindestens eine hydrophobe Gruppe aufweist sowie ein härtbares Bindemittelsystem bestehend aus einen organischen Polymer oder Oligomer. Als Festkörperschmierstoff wird u. a. Graphen eingesetzt, es können als zusätzlicher organischer Festschmierstoff aus Polytetrafluorethylen (PTFE) eingesetzt werden. Das Bindemittel wird aus Epoxiden und u.a. Polyamidimid ausgewählt.

Die DE 10 2012 215 666 A1 betrifft Funktionsteile, insbesondere Lagerteile, Dichtungen oder O-Ringe, die mit einer reibungsreduzierenden Beschichtung versehen sind, die einen Gleitlack umfasst, wobei dieser Gleitlack Graphen umfasst.

Die WO 2016/008770 A1 beschreibt die Verwendung von Silanen, um die Stabilität der Polyimid/amidmatrix zu verbessern und die Adhäsion des Harzmaterials auf dem Substrat ebenfalls zu verbessern. Die Silane werden in diesem Fall als Haftvermittler zwischen Oberfläche und Lack eingesetzt. Aus der EP 1 469 050 B1 ist darüber hinaus bekannt, dass die Verwendung von Silanen nicht zu einer Erhöhung der Verschleißbeständigkeit der Oberflächen führt. Die Silane werden also als Haftvermittler von Lack zu Untergrund eingesetzt.

Aus der CN 106 090 001 A ist ein Mehrkomponenten-Verbund für Gleitteile bekannt, wobei ein Festschmierstoff auf der Oberfläche der Gleitteile gebunden ist und der Festschmierstoff eine Mischung aus nanoskaligen Festschmierstoffen ist, die aus Polyimid, nanoskaligem MoS₂, Carbon-Nanotubes, wahlweise Graphen, Fullerene und Bindemittel bestehen. Vor der Beschichtung wird die Oberfläche mit einem Laser mikrotexturiert. Die Hauptbestandteile dieser Zusammensetzung sind demnach neben dem Pl, nanoskaliges MoS₂ und Carbon-Nanotubes.

Die KR 2016 0034625 A offenbart einen Gleitlack bestehend aus einem Festschmierstoff enthaltend MoS₂ und Graphen in einem Verhältnis von 10 bis 20 : 1. Hauptbestandteil dieses Gleitlackes ist MoS₂ als Festschmierstoff und Graphen.

Nachteilig an den bekannten Gleitlacken, die u.a. auch Graphen enthalten, ist aber, dass die Verwendung von Graphen allein nicht zu den gewünschten verbesserten Eigenschaften der Gleitlacke führt.

Ein weiterer Nachteil von Gleitlacken, in denen nur Graphen in einer Bindemittelmatrix verwendet wird, ist ein zu hohen Reibwert sowie eine starke Neigung zu Stick Slip (sog. Ruckgleiten). Diese Nachteile werden auch in der oben genannten Dissertation von B. Schlüter dokumentiert. In einer Graphik wird dieser Nachteil dargestellt, der Reibwert wird zwar in einem tribologischen Versuch auf ca. µ=0,25 abgesenkt, man sieht aber auch starke Ausschläge in einer unruhigen Kurve, dies ist ein Kennzeichen von "Stick Slip". Die Absenkung des Reibwert von µ=0,25 ist im Vergleich zu Standard-PTFE-Gleitlacken sehr schlecht, bei diesen werden Werte von ca. µ=0,1 oder besser erreicht.

Dies bedeutet, dass durch die Verwendung von Graphen allein eine Senkung des Reibwertes nicht erreicht werden kann.

Da bei neuen Anwendungen immer mehr verschleißbeständigere Schichten vorhanden sein müssen, ist daher das Ziel der vorliegenden Erfindung, einen Gleitlack bereitzustellen, mit dem die Verschleißbeständigkeit und das Reibungsverhalten des Gleitlacks verbessert werden.

Dieses Ziel wird dadurch erreicht, dass ein Gleitlack bereitgestellt wird, bei dem das Graphen mit Festschmierstoffen kombiniert wird und diese Komponenten in eine Bindemittelmatrix eingebracht werden.

Graphen, eine Monolage von Graphit, wurde 2004 durch die Isolation via Scotch-Tape-Methode der Forschung allgegenwärtig auch physisch zugänglich. Allerdings ist es nur abgeschieden auf einer Oberfläche über einen bottom-up Prozess als Monolage stabil. In Pulverform sind nur mehrlagige Graphene erhältlich, die sich in ihren Materialeigenschaften von der Monolage Graphen etwas unterscheiden. Als Graphenmaterial für die Gleitlacke werden in dieser Anmeldung kommerziell erhältliche Graphenplättchen eingesetzt.

Mittlerweile wurden mannigfaltige Herstellmethoden für diese Materialien entwickelt. So groß die Anzahl der unterschiedlichen Synthesewege, so groß ist auch die Auswahl an unterschiedlichen Materialien, die sich z.B. in ihren Abmessungen, in ihrer Form und in ihrem Kohlenstoffgehalt unterscheiden.

Grundsätzlich unterscheidet man zwei Synthesewege. Geht man jeweils von Graphit (top-down Prozess) aus, kann man diesen entweder über einen Oxidationsschritt oder rein durch Applikation hoher Scherkäfte letztendlich zu weniglagigen Graphenplättchen (typischerweise <10 nm) vereinzeln.

Über die Oxidation von Graphit zu Graphitoxid (Hummers-Methode) und anschließender thermischer oder chemischer Reduktion des Graphitoxids inkl. Vereinzelung erhält man "funktionalisiertes Graphen" mit einem Rest an Sauerstoffgruppen (z.B. Hydroxyl-, Carboxylgruppen). Ohne Oxidationsschritt ist die Darstellung beispielsweise durch das Dispergieren von Graphit in Lösemittel mit Hilfe von Surfactants und anschließender hoher Scherbelastung (z.B. Ultraschall oder im High-Shear Mixer) möglich. Neuerdings gibt es auch Methoden, Graphene im größeren Maßstab über einen Precursor (z.B. Acetylen) und anschließender Zündung des Precursor-Sauerstoffgemisches zu erhalten.

Der erfindungsgemäße Gleitlack besteht aus:
(A) 12 bis 32 Gew.-% Bindemittel, wobei das Bindemittel ein Polymer mit einer Molmasse (Mw) von mindestens 5.000 g/mol bis 100.000 g/mol ist und ausgewählt wird aus der Gruppe bestehend aus Polyamidimid (PAI), Polyimid (PI), Polyetheretherketon (PEEK), Polyetherketon (PEK), Polyethersulfon (PES), und/oder Silikonharze oder deren Mischungen,
(B) 0,5 bis 5 Gew.-% Co-Bindemittel, wobei das Co-Bindemittel eine molekulare oder eine Oligomer-Verbindung mit einer Molmasse (Mw) von <1.000 g/mol ist und ausgewählt wird aus der Gruppe bestehend aus Epoxiden, Isocyanaten, blockierten Isocyanaten und/oder Carbodiimiden,
(C) 4 bis 10 Gew.-% Festschmierstoff, wobei der Festschmierstoff ausgewählt wird aus der Gruppe bestehend aus Wachsen, modifizierten Wachsen, PE, PP, PA, Siliconwachse, PTFE, polyfluorierten Verbindungen, Graphit, Bornitrid (hexagonal), Zinn(IV)-Sulfid, Zink(II)-Sulfid, Wolframdisulfid, Metallsulfiden, Calciumphosphaten, Silikaten, Schichtsilikaten, Talk und/oder Glimmer,
(D) 0,5 bis 10 Gew.-% Graphen, wobei als Graphen Graphenplättchen eingesetzt werden, die eine Dicke von bis zu 100 nm bei einer lateralen Ausdehnung von bis zu 20 µm, bevorzugt eine Dicke von 1 bis 5 nm und einer lateralen Ausdehnung von 0,5 bis 10 µm aufweisen
(E) 0,1 bis 2,0 Gew.-% Additive und
Auffüllen auf 100 Gew.-% mit Lösungsmittel.

Diese Zusammensetzung entspricht einer Trockenschichtzusammensetzung nach dem Aushärten von:
(A) 70,2 bis 54,2 Gew.-% Bindemittel,
(B) 2,9 bis 8,5 Gew.-% Co-Bindemittel,
(C) 23,4 bis 16,9 Gew.-% Festschmierstoff,
(D) 2,9 bis 16,9 Gew.-% Graphen und
(E) 0,6 bis 3,4 Gew.-% Additive.

Bei dem Bindemittel handelt es sich um ein Polymer mit einer Molmasse (Mw) von mindestens 5.000 g/mol bis 100.000 g/mol. Die Bindemittel werden ausgewählt aus der Gruppe bestehend aus Polyamidimid (PAI), Polyimid (PI), Polyetheretherketon (PEEK), Polyetherketon (PEK), Polyethersulfon (PES), und/oder Silikonharze oder deren Mischungen.

Als bevorzugtes Bindemittel wird Polyamidimid (PAI) eingesetzt mit einer bevorzugten Molmasse (Mw) von 10.000 bis 30.000 g/mol. Als geeignet hat sich auch PAI mit einer höheren Molmasse erwiesen, dass unter dem Markennamen Torlon der Fa. Solvay vertrieben wird. Hier ist die Molmasse nicht bekannt.

Bei dem Co-Bindemittel handelt es sich um eine molekulare oder Oligomer-Verbindung mit einer Molmasse (Mw) von <1.000 g/mol. Das Co-Bindemittel trägt zum Verschleißschutz bei. Durch die Vernetzung mit dem Polyamidimidpolymer wird die Ausbildung eines polymeren Netzwerkes innerhalb der Schicht und auf der beschichteten Oberfläche gefördert.

Das Co-Bindemittel wird ausgewählt aus der Gruppe bestehend aus Epoxiden, Isocyanaten, blockierten Isocyanaten und Carbodiimiden. Besonders bevorzugt sind N,N,N',N'-Tetraglycidyl-4,4'-methlenebisbenzenamine, Bisphenol-Epichlorhydrin-harze mit einer durchschnittlichen Molmasse von <700 g/mol (Cas-Nr. 25068-38-6) und Bisphenol-A-diglycidylether-bisphenol-A-copolymer mit einer mittleren Molmasse von ca. 900 g/mol (Cas-Nr. 25036-25-3).

Als Festschmierstoffe eignen sich die für Gleitlacke üblicherweise verwendeten organischen sowie anorganischen Festschmierstoffe wie Wachse, modifizierte Wachse, wie z.B. PE, PP, PA, Siliconwachse, PTFE, polyfluorierte Verbindungen, Graphit, Bornitrid (hexagonal), Zinn(IV)-Sulfid, Zink(II)-Sulfid, Wolframdisulfid, Metallsulfide, Calciumphosphate, Silikate und Schichtsilikate, Talk oder Glimmer. Besonders bevorzugt ist PTFE.

Als Additive werden Zusatzstoffe verwendet, wie beispielsweise Netzmittel, Dispergieradditive, Entschäumer, Entlüfter, Verlaufsmittel, Korrosionsinhibitoren und ähnliches verwendet. Allgemein sind die Additive sowohl an die im Lack verwendeten Substanzen, wie Festschmierstoffe und Füllstoffe, als auch dem Anwendungsgebiet, beispielsweise dem zu beschichtenden Untergrund, anzupassen. Ebenfalls können nach Bedarf rheologische Additive und Anti-Absetzmittel eingesetzt werden.

Die Netzmittel werden beispielsweise zur Substrat- und Pigmentbenetzung verwendet. Die Netzmittel werden ausgewählt aus der Gruppe bestehend aus anionischen Tensiden, z.B. mit Carboxylat- oder Sulfonat-Gruppen, kationischen Tensiden, z.B. mit quarternären Ammonium-Gruppen, nichtionischen Tensiden, z.B. mit Alkohol- oder Ethergruppen oder deren Kombinationen, amphotheren (zwitterionischen) Tensiden, z.B. mit quarternären Ammonium-Gruppen und Carboxylaten. Des weiteren werden als Netzmittel (modifizierte) Polysiloxane, (Block-Co-)Polymere mit pigmentaffinen Gruppen, und dergleichen verwendet.

Als Füllstoffe eignen sich die für Lacke üblichen Füller wie beispielsweise Silikate und Phosphate, Ruß, sowie verschiedene Metalloxide.

Die verwendbare Additive, Füllstoffe sowie Pigmente sind, z.B. in Lackformulierung und Lackrezeptur, Bodo Müller/Ulrich Poth, Vincentz Verlag, 2. Auflage, 2005 oder Lehrbuch der Lacktechnologie, Brock/Groteklaes/Mischke, Vincentz Verlag, 3. Auflage, 2009 genannt.

Als Verschleißschutzadditive können verschiedene Metallsalzphosphate oder -silikate sowie deren Mischungen eingesetzt werden. Es eignen sich jedoch auch Metalloxide, beispielsweise Eisenoxide in verschiedenen Oxidationsstufen, Titandioxid und deren Mischoxide, Aluminiumsilikate, sowie Mischoxide. Es können auch Mischungen verschiedener Verschleißschutzadditive verwendet werden. Ebenfalls können verschiedene Nanopartikel bzw. nanoskalige Partikel, die bis in einen Größenbereich von mehreren µm gehen können, als Verschleißschutz für die erfindungsgemäßen Gleitlacke eingesetzt werden.

Als Verschleißschutzadditive eignen sich auch Hartkeramiken wie (Aluminium-) Korund, Bornitrid (kubisch), Titancarbid, Siliziumcarbid, Siliziumnitrid, Titanborid (TiB₂), Zirkonnitrid (ZrN), Aluminiumnitrid (AIN) und Titannitrid (TiN).

Als mögliche Farbgeber eignen sich neben einigen zum Teil unter Verschleißschutzadditive genannten Substanzen alle möglichen (Farb-) Pigmente sowie Farbstoffe.

Das Lösungsmittel wird ausgewählt aus der Gruppe bestehend aus Wasser, organischen Lösungsmittel, wie aromatische Lösungsmittel, z.B. Xylol, Ethyl- bzw. Butylactate; Alkohole, wie Ethanol, Butanol; Ketone, wie Methylethylketon (MEK), Methylisobutylketon (MIBK); Pyrrolidone wie, Methyl-2-pyrrolidon (NMP), N-Ethyl-2-pyrrolidon (NEP), N-Butyl-2-pyrrolidon (NBP); Morpholine, wie N-Acetyl- oder N-Formylmorpholidon (NFM); Amide, wie Dimethylformamid (DMF), N,N-Dimethylacetamid (DMAc) oder Propionamid (CAS 53185-52-7).

Besonders bevorzugt ist ein Gleitlack umfassend:
(A) 12 bis 32 Gew.-% PAI (Feststoff in der eingesetzten Dispersion),
(B) 0,5 bis 5 Gew.-% Epoxid,
(C) 4 bis 10 Gew.-% PTFE-Mikropulver,
(D) 0,5 bis 10 Gew.-% Graphen,
(E) 0,1 bis 2,0 Gew.-% Netzmittel und rheologisches Additiv und
   dann wird auf 100 Gew.-% mit Lösungsmittel aufgefüllt.

Figur 1 zeigt die Ergebnisse des tribologischen Tests.
Figur 2 zeigt die Ergebnisse der Verschleißbeständigkeitsuntersuchungen mit Schichtdicke 1.
Figur 3 zeigt die Ergebnisse der Verschleißbeständigkeitsuntersuchungen mit Schichtdicke 2.

In den nachfolgenden Beispielen wird der erfindungsgemäße Gleitlack detailliert beschrieben und die vorteilhaften Eigenschaften gezeigt.

### Beispiele

### Gleitlack 1a, 1b und 1c

| | |
|---|---|
| PAI-Harzlösung (NEP, 36%ig) | 55 Gew.-% |
| Epoxid | 1 Gew.-% |
| PTFE | 7 Gew.- % |
| Graphen | 2 Gew.-% |
| Netzmittel/rheologische Add. | 0,5 Gew.-% |
| Rest Lösemittel (Xylol, NEP, NBP) | |

Das Graphen in Beispiel 1a hat eine laterale Länge von 2 µm in Beispiel 1b eine laterale Länge von 2 µm und in Beispiel 1c eine laterale Länge von 7 µm.

### Gleitlack 2a und 2b

| | |
|---|---|
| PAI-Harzlösung (NEP, 36%ig) | 55 Gew.-% |
| Epoxid | 1 Gew.-% |
| PTFE | 7 Gew.- % |
| Graphen | 5 Gew.-% |
| Netzmittel/rheologische Add. | 0,5 Gew.-% |
| Rest Lösemittel (Xylol, NEP, NBP) | |

Das Graphen in Beispiel 2a hat eine laterale Länge von 2 µm, in Beispiel 2b eine laterale Länge von 2 µm.

### Referenzbeispiel

| | |
|---|---|
| PAI-Harzlösung (NEP, 36%ig) | 55 Gew.-% |
| Epoxid | 1 Gew.-% |
| PTFE | 7 Gew.-% |
| Graphen | 0% |
| Netzmittel/rheologische Add. | 0,5 Gew.-% |
| Rest Lösemittel (Xylol, NEP, NBP) | |

Für die Herstellung der in den Beispielen genannten Gleitlacke wurden kommerziell erhältliche Graphenplättchen eingesetzt. Diese sind durch einzelne Graphenlagen aufgebaut, die durch schwache Van der Waals Kräfte zusammengehalten werden. Graphenplättchen können eine Dicke von bis zu 100 nm haben, bei einer lateralen Ausdehnung von bis zu 20 µm. Bevorzugt sind Plättchen mit einer Dicke von bis zu 10 nm. Besonders bevorzugt sind Graphenplättchen mit einer geringen Dicke von wenigen nm - bevorzugt 1 bis 5 nm; und einer lateralen Abmessung von 0,5 bis 10 µm, bevorzugt 1 bis 5 µm. Die Graphenplättchen werden in Form von Pulver mit einer hohen spezifischen Oberfläche von mindestens 50 m²/g, bevorzugt mindestens 300 m²/g, besonders bevorzugt im Bereich von 500 bis 800 m²/g verwendet.

Es wurden verschiedene Graphene verwendet:
- 99,5 % C, 2 nm Dicke, 1 bis 2 µm lateral, spezifische Oberfläche: 750 m²/g;
- 91 % C, Rest N und O; funktionialisiertes Graphen, reduziertes Graphenoxid; ca. 1 bis 4 nm Dicke und 1 bis 2 µm lateral; spezifische Oberfläche: 700 bis 800 m²/g;
- >96 % C, 3 bis 4 nm Dicke, 7 µm lateral (D 90-Wert, spezifische Oberfläche 300 bis 400 m²/g.

Die Gleitlacke wurden per Spray-Applikation standardmäßig verarbeitet und aufgebracht, nach Standardbedingungen eingebrannt (180 bis 270°C, ca. 1 bis 2 Stunden). Die Spray-Applikation wird im Labor mit SATA-Minijet, HVLP, Spritzdruck 2 bar, Düse 1,1 mm durchgeführt. In der industriellen Anwendung ist auch eine elektrostatisch Unterstützte Spray-Applikation möglich. Ebenso Applikation über Hochrotationszerstäuber sowie Airless-Spritzen.

### Test Härte:

Nano-Indentationsmessung im Vergleich zu Referenzen
Gleitlack gemäß Beispiel 1a und 1b ähnlich hart wie nanoverstärkter Lack,
Gleitlack gemäß Beispiel 2a und 2b härter wie nanoverstärkter Lack

Zur Untersuchung der Härte der erfindungsgemäßen Gleitlacke wurden Stahlproben mit den Lacken gemäß den Beispielen beschichtet und ausgehärtet und mit einem bekannten Gleitlack, hier Klübertop TN 01-311 A/B verglichen. Der Gleitlack Klübertop ist mit Nanopartikeln verstärkt. Tabelle 1 zeigt die Ergebnisse.

**Tabelle 1**

| | Red. Modulus [GPa] | | Hardness [GPa] | |
|---|---|---|---|---|
| | Average | St. Dev. | Average | St. Dev. |
| TN 01-311 | 5,03 | 0,44 | 0,288 | 0,040 |
| Referenz | 4,65 | 0,29 | 0,262 | 0,029 |
| Gleitlack 1a | 5,33 | 0,20 | 0,304 | 0,036 |
| Gleitlack 1b | 5,25 | 0,27 | 0,283 | 0,026 |
| Gleitlack 2a | 6,17 | 0,67 | 0,354 | 0,067 |
| Gleitlack 2b | 6,01 | 10,35 | 0,326 | 0,031 |

Wie Tabelle 1 zeigt, sind die Gleitlacke mit 2 Gew.-% Graphen in ihrer Härte vergleichbar mit dem bekannten TN 01-311, die Gleitlacke, die 5 Gew.-% Graphen enthalten, weisen eine noch größere Härte auf.

Als nächstes wurden die Gleitlacke tribologischen Tests unterzogen. Hierzu wurde ein rotatives Tribometer mit gleichförmiger, kontinuierlich ansteigender Geschwindigkeit verwendet; Kugel aus 100Cr6 beschichtet gegen unbeschichtete Stahlfläche (Material auch 100Cr6), Geschwindigkeit ansteigend von 0 m/s bis 3,3 m/s, Bewegung linear, Flächenpressung 378 MPa.

Die Gleitlacke aus Beispielen 1 und 2 wurden mit dem oben angegebenen Referenzgleitlack und einem Fertigprodukt Klübertop TN 01-311 A/B einem nanoverstärkem Gleitlack verglichen.

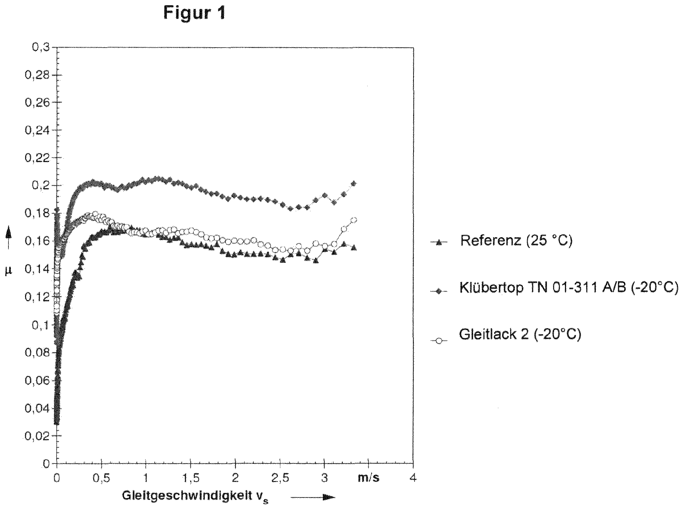

Die Prüfung erfolgte bei -20°C, bei Raumtemperatur (RT) und 150 °C mit ansteigender Gleitgeschwindigkeit. Dabei zeigte sich überraschenderweise (Figur 1), dass insbesondere der Gleitlack gemäß Beispiel 2 (5 Gew.-% Graphen) eine signifikante Verbesserung des Reibwerts bei hoher Geschwindigkeit (>0,5 m/s) bei -20°C im Vergleich zu den Referenzproben hat, wobei Klübertop TN 01-311 bei 20°C und das Referenzbeispiel bei RT abgebildet sind.

Es zeigte sich, dass der Reibwert bei der Temperatur und den Geschwindigkeiten vergleichbar ist wie der Reibwert der Referenzen bei Raumtemperatur.

Anschließend wurden Tests im Hinblick auf die Verschleißbeständigkeit durchgeführt, dazu wurde Ball on Plate mit den oben genannten Gleitlacken beschichtet, Durchmesser Kugel 5 mm, Last: 9,81 N, oszillierende Bewegung, Hub 1 cm, 2400 mm/min Geschwindigkeit

Es wurde eine metallische Oberfläche, wie oben beschrieben, beschichtet.

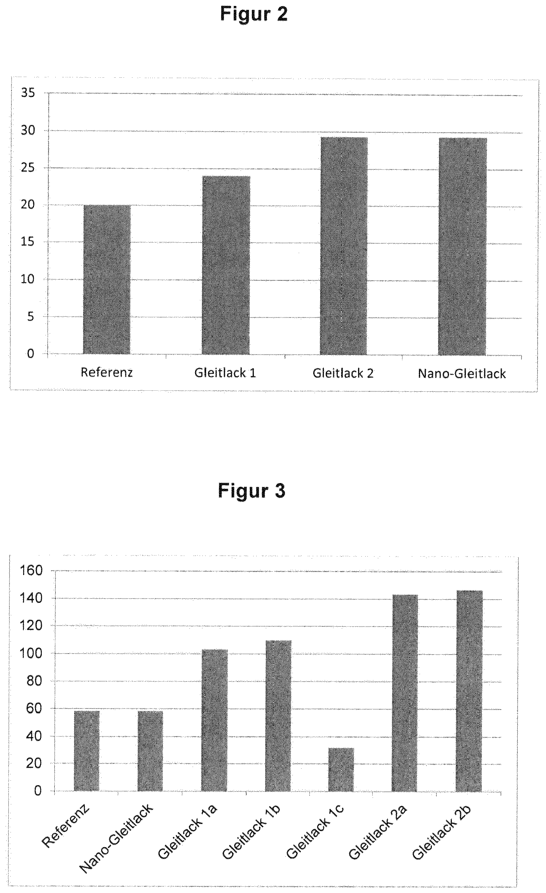

Figur 2 zeigt, dass Gleitlack 1 (2 Gew.-% Graphen) ca. 20 % erhöhte Verschleißbeständigkeit im Ball-Plate-Test im Vergleich zum Referenzbeispiel aufweist.

Gleitlack 2 (5 Gew.-% Graphen) hat eine um ca. 40 bis 50 % erhöhte Verschleißbeständigkeit und ist auf einem Niveau mit nanoverstärktem Gleitlack Klübertop TN 01-311 A/B.

Die Figur 3 zeigt, dass der nanoverstärkte Gleitlack und das Referenzbeispiel bei dieser Schichtdicke auf gleichem Niveau liegen. Gleitlack 1 (Doppelbestimmung) zeigt eine ca. 70% erhöhte Verschleißbeständigkeit als das Referenzbeispiel, Gleitlack 2 (Doppelbestimmung) zeigt eine um ca. 140% erhöhte Verschleißbeständigkeit.

Tabelle 2 zeigt die Daten der Figuren 2 und 3, die Schichtdicke 2 ist signifikant größer als Schichtdicke 1. Es konnte gezeigt werden, dass ein Graphen mit einer Größe von 7 nm schlechtere Ergebnisse lieferte.

**Tabelle 2**

| | Schichtdicke 1 | Schichtdicke 2 |
|---|---|---|
| | Zyklen/Schichtdicke [1/µm] | Zyklen/Schichtdicke [1/um] |
| TN 01-311 | 29 | 57 |
| Referenz | 20 | 58 |
| Gleitlack 1a | 23 | 103 |
| Gleitlack 1b | 24 | 110 |
| Gleitlack 1c | 18 | 32 |
| Gleitlack 2a | 29 | 143 |
| Gleitlack 2b | 28 | 147 |

Die erfindungsgemäßen Gleitlacke eignen sich für den Einsatz auf metallischen Oberflächen, wie beispielsweise Kolben (Motorkolben, Kompressorenkolben), Teile in Klimakompressoren, wie auch Swash-Plate, Magnetanker-beschichtungen, Kompressorenschrauben, Kupplungshülsen, Lagerkäfig für Kugel/Rollenlager und dergleichen, Gurtumlenker, Kugelzapfen, Teile im Fahrwerksbereich, Gleitlager (Pleuellager), Gleitbuchsen, Lenkge-stänge/Lenkhülsen, Teile Gurtschloss wie Rastnocken und dergleichen, Achsen für Planetengetriebe, Gewindespindeln, Schrauben und Schraubverbindungen, Rotoren, Federn, Ventile, Haushalts- und Gartengeräte, Anti-Haftbeschichtungen.

Des weiteren kann der erfindungsgemäße Lack auch für Siebdruck/Rakelverfahren verwendet werden. Der erfindungsgemäße Lack kann in Form von Spray, Tauchbädern, Tauchschleudern, Trommeln auf das zu beschichtende Werkstück aufgebracht werden.

Es hat sich also gezeigt, dass die Verwendung von Graphen in einem Gleitlack allein nicht ausreichend ist, um die Eigenschaften des Gleitlackes zu verbessern. Vielmehr ist eine Kombination von Graphen mit einem Festschmierstoff, insbesondere PFTE und einem Co-Bindemittel in dem Gleitlack erforderlich, um die Eigenschaften des Gleitlacks hinsichtlich der Verschleißbeständigkeit und der Beständigkeit gegenüber Reibung.

## Patentansprüche

1. Graphen-haltiger Gleitlack bestehend aus:
(A) 12 bis 32 Gew.-% Bindemittel, wobei das Bindemittel ein Polymer mit einer Molmasse (Mw) von mindestens 5.000 g/mol bis 100.000 g/mol ist und ausgewählt wird aus der Gruppe bestehend aus Polyamidimid (PAI), Polyimid (PI), Polyetheretherketon (PEEK), Polyetherketon (PEK), Polyethersulfon (PES), und/oder Silikonharze oder deren Mischungen,
(B) 0,5 bis 5 Gew.-% Co-Bindemittel, wobei das Co-Bindemittel eine molekulare oder eine Oligomer-Verbindung mit einer Molmasse (Mw) von <1.000 g/mol ist und ausgewählt wird aus der Gruppe bestehend aus Epoxiden, Isocyanaten, blockierten Isocyanaten und/oder Carbodiimiden,
(C) 4 bis 10 Gew.-% Festschmierstoff, wobei der Festschmierstoff ausgewählt wird aus der Gruppe bestehend aus Wachsen, modifizierten Wachsen, PE, PP, PA, Siliconwachse, PTFE, polyfluorierten Verbindungen, Graphit, Bornitrid (hexagonal), Zinn(IV)-Sulfid, Zink(II)-Sulfid, Wolframdisulfid, Metallsulfiden, Calciumphosphaten, Silikaten, Schichtsilikaten, Talk und/oder Glimmer,
(D) 0,5 bis 10 Gew.-% Graphen, wobei als Graphen Graphenplättchen eingesetzt werden, die eine Dicke von bis zu 100 nm bei einer lateralen Ausdehnung von bis zu 20 µm, bevorzugt eine Dicke von 1 bis 5 nm und einer lateralen Ausdehnung von 0,5 bis 10 µm aufweisen
(E) 0,1 bis 2,0 Gew.-% Additive und
Auffüllen auf 100 Gew.-% mit Lösungsmittel.

2. Graphen-haltiger Gleitlack nach Anspruch 1, bei dem als Bindemittel Polyamidimid (PAI) mit einer Molmasse (Mw) von 10.000 bis 30.000 g/mol eingesetzt wird.

3. Graphen-haltiger Gleitlack nach Anspruch 1, bei dem das Co-Bindemittel ausgewählt wird aus der Gruppe bestehend aus N,N,N',N'-Tetraglycidyl-4,4'-methlenebisbenzenamine, Bisphenol-Epichlorhydrin-harze mit einer durchschnittlichen Molmasse von <700 g/mol (Cas-Nr. 25068-38-6) und Bisphenol-A-diglycidylether-bisphenol-A-copolymer mit einer mittleren Molmasse von ca. 900 g/mol (Cas-Nr. 25036-25-3).

4. Graphen-haltiger Gleitlack nach Anspruch 1, bei dem der Festschmierstoff PTFE ist.

5. Graphen-haltiger Gleitlack nach Anspruch 1, bei dem die Graphene ausgewählt werden aus der Gruppe bestehend aus 99,5 % C, 1 bis 4 nm Dicke, 1 bis 5 µm laterale Länge, spezifische Oberfläche: 750 m²/g, 91 % C, Rest N und O; funktionialisiertes Graphen, reduziertes Graphenoxid; ca. 1 bis 4 nm Dicke und 1 bis 5 µm laterale Länge; spezifische Oberfläche: 700 bis 800 m²/g.

6. Graphen-haltiger Gleitlack nach Anspruch 1, bei dem die Additive ausgewählt werden aus der Gruppe bestehend aus Netzmitteln, Dispergieradditiven, Entschäumern, Entlüftern, Verlaufsmitteln, rheologische Additive, Anti-Absetzmittel, Verschleißschutzmittel, Pigmenten und Farbstoffe.

7. Verwendung des Graphen-haltigen Gleitlacks nach einem der vorherigen Ansprüche zum Beschichten von metallischen Werkstoffen, Compositmaterialien, Aluminium, Aluminiumlegierungen, Stahl-, Edelstahl- und Gusswerkstoffen, Buntmetallen, Kunststoffen und Polymeren.

8. Graphen-haltiger Gleitlack nach einem der Ansprüche 1 bis 6 bestehend nach dem Aushärten aus:
(A) 70,2 bis 54,2 Gew.-% Bindemittel,
(B) 2,9 bis 8,5 Gew.-% Co-Bindemittel,
(C) 23,4 bis 16,9 Gew.-% Festschmierstoff,
(D) 2,9 bis 16,9 Gew.-% Graphen,
(E) 0,6 bis 3,4 Gew.-% Additiven.

## Claims

1. A graphene-containing dry film lubricant, consisting of:
(A) 12 to 32 wt.-% of binder, wherein the binder is a polymer with a molar mass (Mw) of at least 5,000 g/mol to 100,000 g/mol and is selected from the group consisting of polyamideimide (PAI), polyimide (PI), polyetheretherketone (PEEK), polyetherketone (PEK), polyethersulfone (PES), and/or silicone resins or mixtures thereof,
(B) 0.5 to 5 wt.-% of co-binder, wherein the co-binder is a molecular or an oligomer compound with a molar mass (Mw) of <1 000 g/mol and is selected from the group consisting of epoxides, isocyanates, blocked isocyanates and/or carbodiimides,
(C) 4 to 10 wt.-% of solid lubricant, wherein the solid lubricant is selected from the group consisting of waxes, modified waxes, PE, PP, PA, silicon waxes, PTFE, polyfluorinated compounds, graphite, boron nitride (hexagonal), tin(IV) sulfide, zinc(II) sulfide, tungsten disulfide, metal sulfides, calcium phosphates, silicates, sheet silicates, talc and/or mica,
(D) 0.5 to 10 wt.-% of graphene, wherein graphene is used in the form of graphene platelets which have a thickness of up to 100 nm with a lateral extent of up to 20 µm, preferably a thickness of 1 to 5 nm and a lateral extent of 0.5 to 10 µm.
(E) 0.1 to 2.0 wt.-% of additives, and
solvent to make up to 100 wt.-%.

2. The graphene-containing dry film lubricant according to claim 1, wherein polyamideimide (PAI) with a molar mass (Mw) of 10,000 to 30,000 g/mol is used as binder.

3. The graphene-containing dry film lubricant according to claim 1, wherein the co-binder is selected from the group consisting of N,N,N',N'-tetraglycidyl-4,4'-methylenebisbenzenamine, bisphenol-epichlorohydrin resins with an average molar mass of <700 g/mol (Cas No. 25068-38-6) and bisphenol A diglycidyl ether-bisphenol A copolymer with an average molar mass of around 900 g/mol (Cas No. 25036-25-3).

4. The graphene-containing dry film lubricant according to claim 1, wherein the solid lubricant is PTFE.

5. The graphene-containing dry film lubricant according to claim 1, wherein the graphenes are selected from the group consisting of 99.5% C, 1 to 4 nm thickness, 1 to 5 µm lateral length, specific surface area: 750 m²/g, 91% C, remainder N and O; functionalized graphene, reduced graphene oxide; approx. 1 to 4 nm thickness and 1 to 5 µm lateral length; specific surface area: 700 to 800 m²/g.

6. The graphene-containing dry film lubricant according to claim 1, wherein the additives are selected from the group consisting of wetting agents, dispersing additives, defoamers, deaerating agents, flow control agents, rheological additives, antisettling agents, antiwear agents, pigments, and dyes.

7. A use of the graphene-containing dry film lubricant according to one of the preceding claims for coating metallic materials, composite materials, aluminium, aluminium alloys, steel materials, stainless-steel materials, casting materials, nonferrous metals, plastics, and polymers.

8. A graphene-containing dry film lubricant according to one of claims 1 to 6, consisting, after curing, of:
(A) 70.2 to 54.2 wt.-% of binder,
(B) 2.9 to 8.5 wt.-% of co-binder,
(C) 23.4 to 16.9 wt.-% of solid lubricant,
(D) 2.9 to 16.9 wt.-% of graphene,
(E) 0.6 to 3.4 wt.-% of additives.

## Revendications

1. Laque lubrifiante contenant du graphène, la laque étant constituée de :
(A) 12 à 32% en poids d'un liant, le liant étant un polymère d'une masse moléculaire (Mw) d'au moins 5.000 g/mol à 100.000 g/mol et sélectionné parmi le groupe constitué de polyamidimide (PAI), polyimide (PI), polyétheréthercétone (PEEK), polyéthercétone (PEK), polyéthersulfone (PES) et/ou de résines de silicone ou de leurs mélanges,
(B) 0,5 à 5% en poids d'un liant auxiliaire, le liant auxiliaire étant un composé moléculaire ou un composé oligomère d'une masse moléculaire (Mw) de <1.000 g/mol et sélectionné parmi le groupe constitué d'époxydes, d'isocyanates, d'isocyanates bloqués et/ou de carbodiimides,
(C) 4 à 10% en poids d'un lubrifiant solide, le lubrifiant solide étant sélectionné parmi le groupe constitué de cires, de cires modifiées, de PE, PP, PA, de cires de silicone, de PTFE, de composés polyfluorés, de graphite, de nitrure de bore (hexagonal), de sulfure d'étain (IV), de sulfure de zinc (II), de disulfure de tungstène, de sulfures métalliques, de phosphates de calcium, de silicates, de silicates lamellaires, de talc et/ou de mica,
(D) 0,5 à 10% en poids de graphène, le graphène étant utilisé sous forme de plaquettes de graphène qui présentent une épaisseur jusqu'à 100 nm avec une expansion latérale jusqu'à 20 µm, de préférence une épaisseur de 1 à 5 nm et une expansion latérale de 0,5 à 10 µm,
(E) 0,1 à 2,0 % en poids d'additifs, et
complété à 100% en poids d'un solvant.

2. Laque lubrifiante contenant du graphène suivant la revendication 1, dans lequel du polyamidimide (PAI) d'une masse moléculaire (Mw) de 10.000 à 30.000 g/mol est utilisé comme liant.

3. Laque lubrifiante contenant du graphène suivant la revendication 1, dans lequel le liant auxiliaire est sélectionné parmi le groupe constitué de N,N,N',N'-tétraglycidyle-4,4' - méthylènebisbenzenamine, de résines de bisphénol-épichlorhydrine avec une masse moléculaire moyenne de < 700 g/mol (n° cas 25068-38-6) et de bisphénol-A-diglycidyléther-bisphénol-A-copolymère avec une masse molaire moyenne de 900 g/mol environ (n° cas 25036-25-3).

4. Laque lubrifiante contenant du graphène suivant la revendication 1, dans lequel le lubrifiant solide est du PTFE.

5. Laque lubrifiante contenant du graphène suivant la revendication 1, dans lequel les graphènes sont sélectionnés parmi le groupe constitué de 99,5% C, d'une épaisseur de 1 à 4 nm, d'une longueur latérale de 1 à 5 µm, d'une surface spécifique de 750 m²/g, de 91 % C, d'un reste de N et d'O, de graphène fonctionnalisé, d'oxyde de graphène réduit, d'une épaisseur de 1 à 4 nm environ, d'une longueur latérale de 1 à 5 µm, d'une surface spécifique de 700 à 800 m²/g.

6. Laque lubrifiante contenant du graphène suivant la revendication 1, dans lequel les additifs sont sélectionnés parmi le groupe constitué d'agents mouillants, de dispersants, d'agents antimousse, d'additifs de dégazage, d'additifs d'écoulement, d'additifs rhéologiques, d'agents stabilisants, d'agents anti-usure, de pigments et de colorants.

7. Utilisation de la laque lubrifiante contenant du graphène suivant une des revendications précédentes pour revêtir des matériaux métalliques, des matériaux composites, de l'aluminium, des alliages d'aluminium, des matériaux en acier, des matériaux en acier inoxydable et des matériaux en fonte, des métaux non ferreux, des matériaux artificiels et des polymères.

8. Laque lubrifiante contenant du graphène suivant une des revendications 1 à 6, constituée après durcissement de :
(A) 70,2 à 54,2 % en poids de liant,
(B) 2,9 à 8,5 % en poids de liant auxiliaire,
(C) 23,4 à 16,9 % en poids de lubrifiant solide,
(D) 2,9 à 16,9 % en poids de graphène,
(E) 0,6 à 3,4 % en poids d'additifs.
